(19) Europäisches Patentamt
European Patent Office
Office européen des brevets

(11) **EP 2 740 920 A1**

(12) **EUROPEAN PATENT APPLICATION**

(43) Date of publication:
**11.06.2014 Bulletin 2014/24**

(51) Int Cl.:
*F02D 41/00* [(2006.01)]     *F02D 41/14* [(2006.01)]

(21) Application number: **12195476.2**

(22) Date of filing: **04.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **FPT Industrial S.p.A.**
**10156 Torino (IT)**

(72) Inventor: **Odello, Fabio**
**10093 Collegno (IT)**

(74) Representative: **Fiume, Orazio et al**
**Notarbartolo & Gervasi S.p.A.**
**Corso di Porta Vittoria, 9**
**IT-20122 Milano (IT)**

(54) **System for estimating a gas flow rate entering a cylinder of an internal combustion engine**

(57)     System for controlling an internal combustion engine having at least a cylinder and its respective piston and realizing at least an exhaust step of discharging the exhaust gases and a subsequent intake step of sucking substantially fresh gases, comprising a processing means configured to estimate a flow rate ($\dot{m}_{exp}$) of exhaust gas remaining in a cylinder after the exhaust step.

Fig. 2

**Description**

**Application field of the invention**

The present invention refers to the control systems of internal combustion engines and in particular to those systems suitable to estimate the flow rate of substantially fresh gases entering an internal combustion engine. Such systems are usually used as means for diagnosing the functioning of mass-air sensors (mass flow sensors).

Description of the prior art

An optimal management of internal combustion engines needs an accurate estimation of the flow rate of the gases entering the engine cylinders during the intake step.
Such gases usually comprises fresh air and, where an EGR valve is present, a small variable quantity of recirculated exhaust gas.
The estimation of the overall intake flow rate is used for different reasons, for example:

-     during the accelerator release, it is used to diagnose the correct functioning of the mass flow sensor, since it is during the accelerator release that the ideal conditions to estimate the gases entering the engine and to compare it with the measurement detected by the mass flow rate occur;
-     to compensate construction or ageing drifts of the mass flow sensor itself;
-     to perform an injection drift compensation FMO: a strategy based on the estimation of the intake gas flow rate in order to estimate, in its turn, the "lambda". The estimation of the lambda is then used in the so-called strategy of injection drift compensation FMO which compares estimation and measurement of the lambda;
-     to estimate, indirectly, the temperature and the pressure at the exhaust manifold and/or the flow rate of the exhaust gas recirculated.

In general, the estimation of the flow rate is performed by means of a model, known as "Speed-Density" based on the thermodynamic conditions of the intake gas, on the revolutions per minute, on the piston displacement and on the volumetric filling coefficient.

Summary of the invention

The aim of the present invention is to improve the control of the internal combustion engine, in particular in the estimation of the flow rate of the substantially fresh gases entering a cylinder of the engine. The accuracy of such estimation, as shown above, affects numerous further systems and methods for controlling the engine.
A method for estimating a flow rate of a gas entering a cylinder of an internal combustion engine is the object of the present invention.
According to the present invention, a flow rate estimation is performed of the exhaust gas remaining in the cylinder after, and in spite of, the exhaust step when the exhaust gas are discharged from the cylinder. Furthermore, according to the present invention, the contribution of such exhaust gas flow rate is considered also in relation to the fact that it tends to expand in the cylinder during the immediately consequent intake step, reducing the gas flow rate really sucked into the cylinder.
The present invention finds application in the internal combustion engines that include at least an exhaust step wherein exhaust gases are discharged and a subsequent intake step wherein substantially fresh gases are sucked, where "substantially" means that the fresh gases may contain a percentage of exhaust gas recirculated according to the EGR technique.
According to the present invention, the flow rate of said exhaust gas exploits a pressure measurement at the exhaust manifold. It has been detected, indeed, after numerous bench tests, that the pressure measured at the exhaust manifold affects remarkably the filling of the cylinders during the intake step. Thus, the estimation of the flow rate of the substantially fresh gases made according to the present invention is much more precise and reliable in time, above all in case of a high difference of pressure between the intake manifold and the exhaust manifold.
The object of the present invention is also a control device of an internal combustion engine implementing such method.
A further object of the present invention is an internal combustion engine and a ground vehicle comprising said internal combustion engine.
The claims are an integral part of the present description.

Brief description of the Figures

Further purposes and advantages of the present invention will become clear from the following detailed description of a preferred embodiment (and of its alternative embodiments) and the drawings that are attached hereto, which are merely illustrative and non-limitative, in which:

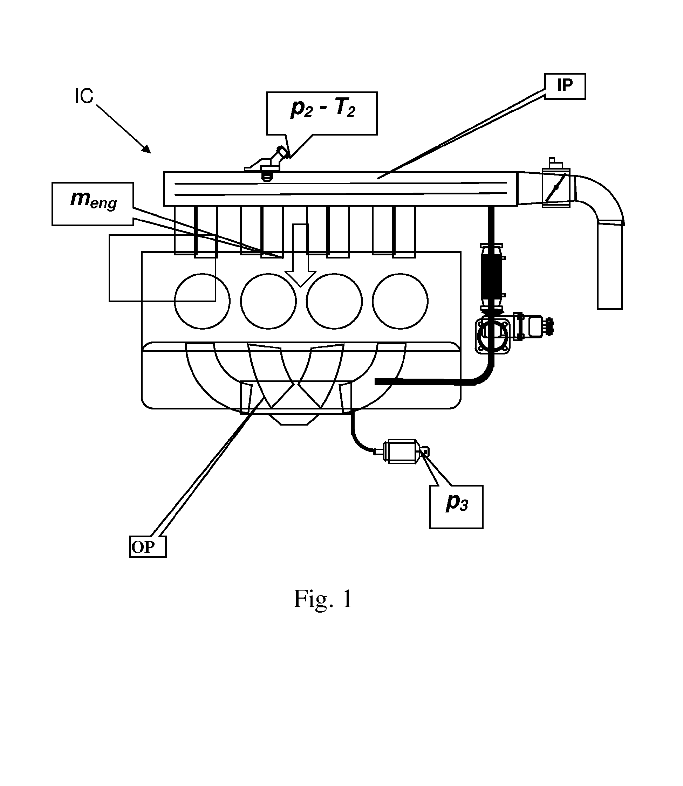

figure 1 shows an internal combustion engine comprising means to implement the present method;
figure 2 shows a control scheme in outline representing the method that is object of the present invention.

In the figures the same reference numbers and letters identify the same elements or components.

Detailed description of preferred embodiments of the invention

The method that is object of the invention is now described. The method allows to obtain an improved estimation of the flow rate of gas, substantially fresh air, namely possibly containing recirculated exhaust gas, entering an internal combustion engine, by means of the measurement of the pressure P3 at the exhaust manifold OP of the internal combustion engine IC.

In order to understand better the present invention, a comparison is shown between the first equation e1 representing, for example, a Speed-Density model, per se known, and a second equation e2 representing the Speed-Density model modified according to the present invention:

$$\dot{m}_{eng}[mg/cyl] = \eta_{vol}\frac{p_2}{RT_2}V_d \cdot \frac{10^5}{N_{cyl}} \qquad (e1)$$

$$\overline{\dot{m}}_{eng}[mg/cyl] = \left(\eta_{vol}\frac{p_2}{RT_2}\cdot\frac{r_c}{r_c-1}V_d - \frac{p_3}{RT_2}\cdot\frac{V_d}{r_c-1}\right)\cdot\frac{10^5}{N_{cyl}} \qquad (e2)$$

Where, with reference to the figures,

- $\overline{\dot{m}}_{eng}$ stands for the maximum flow rate of the gases entering a cylinder cyl of the engine expressed in mg/cyl according to the present invention, while
- $\dot{m}_{eng}$ stands for the theoretical maximum flow rate entering the cylinder(s) cyl of the engine expressed again in mg/cyl according to the prior art (Speed-Density);
- P2 and T2 stand for, respectively, the pressure and the temperature at the intake manifold IP,
- P3 stands for the pressure at the exhaust manifold OP,
- $r_c$ stands for the compression ratio of the engine, namely [piston displacement + upper dead space volume] divided by [residual volume when the piston is at the upper dead center],
- Vd stands for the piston displacement of the engine,
- $N_{cyl}$ stands for the number of cylinders of the engine,
- $\eta_{VOL}$ stands for the volumetric filling coefficient, whose meaning is known to the person skilled in the art,
- R is the constant of the gases.

From the comparison from the equations e1 and e2 it will be clear that according to the present invention

$$\overline{\dot{m}}_{eng} = \dot{m}_{eng}\frac{r_c}{r_c-1} - \dot{m}_{exp} \qquad (e3)$$

wherein $\dot{m}_{exp}$ stands for the residual flow rate of exhaust gas, namely not being expelled from the cylinder in the exhaust step that precedes the intake step, namely which is trapped in the cylinder and precisely in the residual volume corresponding to the position of the piston at the upper dead center. Such exhaust gas flow rate, in the subsequent intake step, expands in the cylinder and limits the entering of substantially fresh gas.

According to the present invention, the theoretical air flow rate entering the cylinder is supposed to enter in a theoretical volume equal to the piston displacement Vd of the engine, in addition to said residual volume defined by the position of the piston at the upper dead center. Thus the weight $\dfrac{r_c}{r_c - 1}$ takes into account such increase of volume available to the air entering the engine, namely the intake manifold.

According to the present invention it is estimated that the exhaust gas trapped in the cylinder after the exhaust step has, approximately, the same pressure as the one detected in output from the engine, namely at the exhaust manifold OP, namely p3.

Different laboratory tests have been performed, and it has been detected that equations 2 and 3 represent the flow rate of air entering the engine better than the previous art.

Such equations e2 and e3 may be converted in flow rate/time by multiplying the number of revolutions per minute of the engine and removing from the denominator the parameter $N_{cyl}$. The method is described with reference to the functional block diagrams of the attached figures, wherein each block is intended to correspond to the logic functions performed by the apparatus which realizes them.

In line with the language used in the field of the automatic controls, each block can be considered as a filter applied to the respective inputs, regardless of the type of logical operations performed.

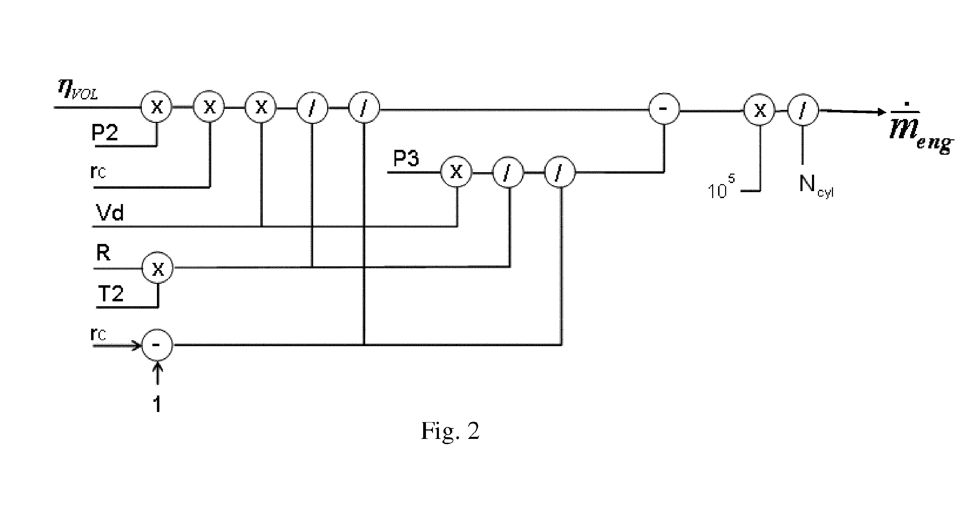

Comparing the equation e2 with the diagram of figure 2, it will be understood that the formula e2 is literally implemented.

As regards the volumetric filling coefficient $\eta_{VOL}$, it can be obtained in different ways. For example, according to a method per se known, the volumetric filling coefficient is obtained empirically on a test bench on the basis of the revolutions per minute of the engine and on the basis of the mass of the fuel injected.

Advantageously, the method described herein, with its alternative embodiments, may be easily implemented in an engine control unit ECI, which is also part of the present invention. Thus, the present invention may advantageously be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details. The elements and the characteristics described in the different preferred embodiments may be combined without departing from the scope of the present invention.

## Claims

1. Method for estimating a flow rate ($\overline{\dot{m}}_{eng}$) of a gas entering the cylinder of an internal combustion engine realizing at least an exhaust step of discharging the exhaust gases and a subsequent intake step of sucking substantially fresh gases, comprising a step of estimating a flow rate ($\dot{m}_{exp}$) of exhaust gas remaining in a cylinder after an exhaust step.

2. Method according to claim 1, wherein said flow rate ($\dot{m}_{exp}$) of exhaust gas remaining in the cylinder after the exhaust step is calculated as a function of a pressure (P3) measured in output from said cylinder.

3. Method according to claim 2, wherein said flow rate ($\dot{m}_{exp}$) of exhaust gas remaining in the cylinder after the exhaust step is equal to $\dfrac{p_3}{RT_2} \cdot \dfrac{V_d}{r_c - 1} \cdot \dfrac{10^5}{N_{cyl}}$ [mg/cyl] where P3 is a pressure measured in output (OP) from said cylinder during said exhaust step, when a respective cylinder is at the upper dead center,
T2 is a temperature measured in input to said cylinder Vd is the piston displacement of the cylinder,
rc is a compression ratio of an engine comprising said cylinder,
R is the universal constant of the gases.

4. Method according to one of the previous claims, comprising a step of calculating a theoretical flow rate ($\dot{m}_{eng}$) of the gas entering said cylinder during an intake step on the basis of parameters (T2, P2) measured at the input (IP) of the engine and a step of subtracting said flow rate ($\dot{m}_{exp}$) of the exhaust gas remaining in the cylinder after the exhaust step preceding said intake step from said theoretical flow rate.

5. Method according to claim 4, wherein said estimation of said flow rate of gas entering said cylinder ($\dot{m}_{eng}$) is performed assuming that it enters a volume equal to the piston displacement (Vd) of the engine increased of a residual volume defined by said respective piston when it is at the upper dead center.

6. Method according to claim 5, wherein said flow rate ($\overline{\dot{m}_{eng}}$) of gas entering a cylinder of an engine is equal to

$$\dot{m}_{eng} \frac{r_c}{r_c - 1} - \dot{m}_{exp} \quad , \quad \text{where the ratio} \quad \frac{r_c}{r_c - 1} \quad \text{akes into account said volume increase, } \dot{m}_{eng} \text{ stands}$$

for said theoretical flow rate and $\dot{m}_{exp}$ stands for said flow rate of the exhaust gas remaining in the cylinder after the exhaust step.

7. Method according to one of the claims from 4 to 6, wherein said theoretical flow rate ($\dot{m}_{eng}$) of gas entering said cylinder is calculated according to the Speed-Density model.

8. Device for estimating a flow rate of a gas entering the cylinder of an internal combustion engine realizing at least an exhaust step of discharging the exhaust gases and a subsequent intake step of sucking substantially fresh gases, comprising a processing means (ECI) configured to estimate a flow rate ($\dot{m}_{exp}$) of exhaust gas remaining in a cylinder after an exhaust step.

9. Device according to claim 8, further comprising:

   - (P2) a pressure sensor at the intake manifold (IP);
   - (T2) a temperature sensor at the intake manifold (IP);
   - (P3) a pressure sensor at the exhaust manifold (OP);
   and wherein said processing means are configured to perform all the steps of any one of the previous claims from 2 to 8.

10. Computer program comprising program code means suitable for performing all the steps of any claim from 1 to 7, when such program is run on a computer.

11. Computer-readable means comprising a recorded program, said computer-readable means comprising program code means suitable for performing all the steps according to the claims from 1 to 7, when said program is run on a computer.

12. Internal combustion engine comprising a device (ECI) according to claim 8 or 9.

13. Ground vehicle comprising an internal combustion engine according to claim 12.

IC

$p_2 - T_2$

IP

$m_{eng}$

$p_3$

OP

Fig. 1

Fig. 2

EP 2 740 920 A1

EUROPEAN SEARCH REPORT

Application Number

EP 12 19 5476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Per Andersson: "Intake Air Dynamics on a Turbocharged SI-Engine with Wastegate, Thesis 934",<br><br>,<br>January 2002 (2002-01), pages 4PP,I-IV,1-75, XP002696866,<br>Linköping Univeristy, Sweden<br>ISBN: 9173732826<br>Retrieved from the Internet:<br>URL:http://citeseerx.ist.psu.edu/viewdoc/download?doi=10.1.1.140.8578&rep=rep1&type=pdf<br>[retrieved on 2013-05-15]<br>* page 8 - page 10; figure 3.1 *<br>* page 18 - page 23 *<br>* page 35 - page 42 *<br>----- | 1-9,12, 13 | INV.<br>F02D41/00<br>F02D41/14 |
| X | US 2012/291534 A1 (WANG YUE-YUN [US] ET AL) 22 November 2012 (2012-11-22)<br>* the whole document *<br>----- | 1,2,8-13 | |
| X | FR 2 824 596 A1 (RENAULT [FR])<br>15 November 2002 (2002-11-15)<br>* pages 1,2,8-12; claims 1-3; figure 1 *<br>----- | 1-4,8-13 | TECHNICAL FIELDS SEARCHED (IPC)<br><br>F02D |
| A | US 5 714 683 A (MALONEY PETER JAMES [US])<br>3 February 1998 (1998-02-03)<br>* the whole document *<br>----- | 1,5-7 | |
| A | HEYWOOD JOHN B: "Internal Combustion Engine Fundamentals, PASSAGE",<br>1 January 1988 (1988-01-01), MCGRAW-HILL, INC., XP002696867,<br>ISBN: 007028637X<br>pages 209-209,<br>* page 209 *<br>-----<br><br>-/-- | 5-7 | |

The present search report has been drawn up for all claims

| Place of search | Date of completion of the search | Examiner |
|---|---|---|
| Munich | 15 May 2013 | Ossanna, Luca |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................

& : member of the same patent family, corresponding
    document

8

Europäisches
Patentamt

European
Patent Office

Office européen
des brevets

## EUROPEAN SEARCH REPORT

Application Number

EP 12 19 5476

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FOX J W ET AL: "A model for predicting residual gas fraction in spark-ignition engines", SAE TECHNICAL PAPERS,, vol. SAE PAPER 931025, 1 March 1993 (1993-03-01), pages 1-7, XP008114496, * the whole document *<br><br>----- | 1-13 | |

TECHNICAL FIELDS
SEARCHED (IPC)

The present search report has been drawn up for all claims

| Place of search | Date of completion of the search | Examiner |
|---|---|---|
| Munich | 15 May 2013 | Ossanna, Luca |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 12 19 5476

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2013

| Patent document cited in search report | | Publication date | Patent family member(s) | | Publication date |
|---|---|---|---|---|---|
| US 2012291534 | A1 | 22-11-2012 | CN | 102787947 A | 21-11-2012 |
| | | | DE | 102012207895 A1 | 22-11-2012 |
| | | | US | 2012291534 A1 | 22-11-2012 |
| FR 2824596 | A1 | 15-11-2002 | NONE | | |
| US 5714683 | A | 03-02-1998 | EP | 0845587 A2 | 03-06-1998 |
| | | | US | 5714683 A | 03-02-1998 |

EPO FORM P0459

For more details about this annex : see Official Journal of the European Patent Office, No. 12/82